# EUROPEAN PATENT SPECIFICATION

(11) **EP 3 248 410 B1**
(45) Date of publication and mention of the grant of the patent: **15.07.2020**
(21) Application number: 16748714.9
(22) Date of filing: 04.02.2016
(51) Int. Cl.: H04W 74/08, H04W 72/04, H04L 5/00, H04L 1/16, H04L 1/18

(54) **DEVICE AND METHOD FOR TRANSMITTING DATA IN A WIRELESS LAN MULTI-USER TRANSMISSION OPPORTUNITY**
VORRICHTUNG UND VERFAHREN ZUR ÜBERTRAGUNG VON DATEN IN EINER GELEGENHEIT ZUR MEHRFACHBENUTZERÜBERTRAGUNG IN DRAHTLOSEM LAN
DISPOSITIF ET PROCÉDÉ POUR TRANSMETTRE DES DONNÉES DANS UNE OPPORTUNITÉ DE TRANSMISSION MULTIUTILISATEUR DE RÉSEAU LOCAL (LAN) SANS FIL

(30) Priority: 09.02.2015 US 201562113832 P; 02.02.2016 US 201615013535
(43) Date of publication of application: 29.11.2017
(73) Proprietor: Huawei Technologies Co., Ltd., Longgang District Shenzhen, Guangdong 518129 (CN)
(72) Inventor: ABOUL-MAGD, Osama, Kanata, Ontario K2M 2K2 (CA); SUH, Jung Hoon, Kanata, Ontario K2W 0A8 (CA)
(74) Representative: Gill Jennings & Every LLP
(86) International application number: PCT/CN2016/073506
(87) International publication number: WO 2016/127913

(56) References cited:
- WO-A1-2010/099496
- CN-A- 104 185 217
- CN-A- 104 202 822
- GB-A- 2 501 898
- US-A1- 2010 056 069
- LOU HANQING ET AL: "Sub-channel selection for multi-user channel access in next generation Wi-Fi", 2014 IEEE 25TH ANNUAL INTERNATIONAL SYMPOSIUM ON PERSONAL, INDOOR, AND MOBILE RADIO COMMUNICATION (PIMRC), IEEE, 2 September 2014 (2014-09-02), pages 779-784, XP032789861, DOI: 10.1109/PIMRC.2014.7136270 [retrieved on 2015-06-25]

## Description

### TECHNICAL FIELD

The present invention relates to wireless communications, and, in particular embodiments, to systems and methods for transmitting data in a wireless local area network (LAN) multi-user (MU) transmission opportunity (TXOP).

### BACKGROUND

Wireless local area networks (LANs) allow stations (STAs) to communicate with an access point (AP) by allocating time resources, commonly referred to as transmission opportunities (TXOPs). In conventional wireless LANs, TXOPs typically carry multiple frame transmissions from a wireless LAN AP to a single STA, or vice versa, and may be accessed using a distributed contention-based access scheme, such as a carrier-sense multiple access/collision avoidance (CSMA/CA) protocol. To meet increasing demands, next generation wireless LANs will likely need to provide higher data rates to ever increasing numbers of STAs.

LOU HANQING ET AL: "Sub-channel selection for multi-user channel access in next generation Wi-Fi", 2014 IEEE 25TH ANNUAL INTERNATIONAL SYMPOSIUM ON PERSONAL, INDOOR, AND MOBILE RADIO COMMUNICATION (PIMRC), IEEE, 2 September 2014 relates to sub-channel selection for multi-user channel access in next generation Wi-Fi.

### SUMMARY

Technical advantages are generally achieved by embodiments of this disclosure which describe a system and method for transmitting data in a wireless local area network (LAN) multi-user (MU) transmission opportunity (TXOP).

In particular, the present disclosure provides a method according to claim 1 and a device according to claim 14. Further technical features of each of these aspects are provided in the dependent claims.

### BRIEF DESCRIPTION OF THE DRAWINGS

For a more complete understanding of the present disclosure, and the advantages thereof, reference is now made to the following description taken in conjunction with the accompanying drawings, in which:
FIG. 1 illustrates a diagram of an embodiment wireless network;
FIG. 2 illustrates a diagram of a first embodiment TXOP frame sequence;
FIG. 3 illustrates a diagram of a second embodiment TXOP frame sequence;
FIG. 4 illustrates a diagram of a third embodiment TXOP frame sequence;
FIG. 5 illustrates a diagram of a fourth embodiment TXOP frame sequence;
FIG. 6 illustrates a flowchart of a first embodiment method for communicating data in a TXOP;
FIG. 7 illustrates a flowchart of a second embodiment method for communicating data in a TXOP;
FIG. 8 illustrates a flowchart of a third embodiment method for communicating data in a TXOP;
FIG. 9 illustrates a flowchart of a fourth embodiment method for communicating data in a TXOP;
FIG. 10 illustrates a diagram of an embodiment processing system; and
FIG. 11 illustrates a diagram of an embodiment transceiver.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims.

Embodiments of the present invention transmit orthogonal frequency-division multiple access (OFDMA) frames in transmission opportunities (TXOPs) of a wireless local area network (LAN). The OFDMA frames may be downlink or uplink OFDMA data frames. In an embodiment, an OFDMA data frame is a multi-user (MU) OFDMA data frame carrying data associated with different stations (STAs) multiplexed over different frequency sub-bands. In some embodiments, multiple frames are communicated in the same TXOP between a STA and an AP. For example, a downlink OFDMA data frame may be communicated in the same TXOP as an uplink OFDMA data frame. Acknowledgement (ACK) frames may be communicated in a TXOP to acknowledge reception of an OFDMA data frame communicated in the TXOP. An ACK message may acknowledge receipt of a single frame, or may be a block ACK (BA) acknowledging receipt of multiple frames.

In some embodiments, a downlink frame in a TXOP may trigger transmission of an uplink OFDMA data frame in the TXOP. In such an embodiment, the downlink frame may carry resource allocation information corresponding to the uplink OFDMA data frame. In one example, an uplink OFDMA data frame may be triggered by a downlink OFDMA data frame, a downlink ACK frame, or a downlink trigger frame. The downlink trigger frame may be a frame structure that is recognized by a receiver, and that prompts or otherwise instructs the receiver to communicate an uplink frame.

In some embodiments, one or more sets of cascaded frames are transmitted in a TXOP. A cascaded set of frames includes a downlink frame that is followed by an uplink frame, or vice versa. In one example, a downlink OFDMA data frame, an uplink OFDMA data frame following the downlink OFDMA frame, a downlink ACK frame following the uplink OFDMA data frame, and an uplink ACK frame following the downlink ACK frame are communicated in the same TXOP. The downlink ACK frame acknowledges receipt of the uplink OFDMA frame, and the uplink ACK frame acknowledges receipt of the downlink OFDMA frame. These and other aspects are described in greater detail below.

Multi-user transmissions in a wireless LAN have been introduced as part of the Institute of Electrical and Electronics Engineers (IEEE) 802.11ac amendment to the IEEE 802.11 specification. In IEEE 802.11ac, multiple STAs are multiplexed in the spatial domain using MU multiple input, multiple output (MIMO) technologies, and MU transmissions are described for a downlink transmission from an access point to multiple STAs.

With the introduction of OFDMA to a wireless LAN, data segments for multiple users may also be multiplexed in the frequency domain. Multiplexing in the frequency domain may be done independently of, or in addition to, multiplexing in the spatial domain. In addition, MU transmissions may also be transmitted in an uplink direction from multiple STAs to an AP, e.g., by use of the OFDMA technology.

A wireless LAN system may employ a distributed algorithm to access a wireless medium (WM) without a central coordinator. Conventionally, an interval of time during which a particular quality-of-service (QoS) STA has the right to initiate frame exchange sequences on a wireless medium in a wireless LAN is referred to as a transmission opportunity (TXOP). As such, a TXOP may be characterized by an owner, and an interval of time during which the owner initiates a frame exchange sequence. The owner of a TXOP may be determined based on a distributed contention mechanism. Conventionally, transmissions during a TXOP are mostly in one direction, that is, either primarily uplink (UL) transmissions or primarily downlink transmissions. A reverse direction grant (RDG) may allow a TXOP holder to transfer the right of control of a TXOP to another STA.

Embodiments of the present disclosure describe an architectural solution that may be referred to as MU TXOP. MU TXOP may complement the types of MU transmissions currently being discussed in 802.11ax. In various embodiments, with MU transmissions and with the AP coordinating UL and DL transmissions, the AP is naturally the owner of the TXOP. In some embodiments, an MU TXOP is an interval of time where the AP schedules MU UL and MU DL transmissions as needed. An MU TXOP may be pre-scheduled for STAs so that the STAs obtain ownership of the MU TXOP as scheduled for transmissions. An MU TXOP may also be acquired using contention-based mechanisms where STAs contend for ownership of the MU TXOP. According to various embodiments, an MU TXOP includes one or more of the following transmission types as initiated by the AP: cascaded DL and UL frames, DL transmission, UL transmission triggered by a trigger frame, UL transmission triggered by an acknowledgment (ACK) frame where resource allocation for the UL transmission is indicated in the ACK frame PHY header or at the MAC level on the frame body, and ACK frames, either normal or block ACK (BA).

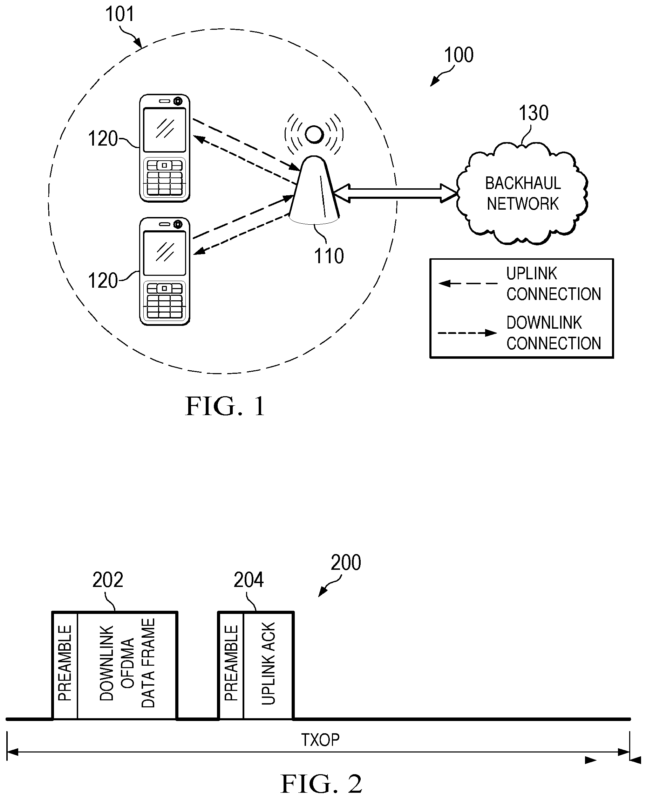

FIG. 1 illustrates a network 100 for communicating data. The network 100 comprises an access point 110 having a coverage area 101, a plurality of mobile stations 120, and a backhaul network 130. As shown, the access point 110 establishes uplink (dashed line) and/or downlink (dotted line) connections with the mobile stations 120, which serve to carry data from the mobile stations 120 to the access point 110 and vice-versa. Data carried over the uplink/downlink connections may include data communicated between the mobile stations 120, as well as data communicated to/from a remote-end (not shown) by way of the backhaul network 130. As used herein, the term "access point" refers to any component (or collection of components) configured to provide wireless access to a network, such as a Wi-Fi access point (AP), an evolved NodeB (eNB), a macro-cell, a femtocell, or other wirelessly enabled devices. Access points may provide wireless access in accordance with one or more wireless communication protocols, e.g., long term evolution (LTE), LTE advanced (LTE-A), High Speed Packet Access (HSPA), Wi-Fi 802.11a/b/g/n/ac, etc. As used herein, the term "mobile station" refers to any component (or collection of components) capable of establishing a wireless connection with an access point, such as a Wi-Fi mobile station (STA), a user equipment (UE), and other wirelessly enabled devices. In some embodiments, the network 100 may comprise various other wireless devices, such as relays, low power nodes, etc.

In a wireless LAN, an AP may communicate with multiple STAs over the same TXOP. A TXOP of a wireless LAN may be an interval of time where an AP schedules uplink and/or downlink transmissions. STAs may access resources of a TXOP dynamically using a contention-based access technique. Alternatively, resources of a TXOP may be assigned to STAs statically or semi-statically.

In some embodiments, one or more OFDMA frames are communicated over a TXOP. FIG. 2 illustrates a diagram of an embodiment TXOP frame sequence 200. As shown, the embodiment TXOP frame sequence 200 includes a downlink OFDMA data frame 202 and an uplink ACK frame 204 communicated in a TXOP. The downlink OFDMA data frame 202 may be an MU OFDMA data frame that carries data to different STAs over different frequency sub-bands. STAs receiving data in the downlink OFDMA data frame 202 may be referred to as recipient STAs of the downlink OFDMA data frame 202. In one example, an AP assigns different frequency sub-bands to the different STAs, and transmits data segments in the downlink OFDMA data frame 202 to the STAs over the assigned frequency sub-bands. In such an example, a recipient STA may identify one or more frequency sub-bands assigned to the recipient station based on, for example, a preamble field of the downlink OFDMA data frame 202, and then receive data segments over the assigned frequency sub-bands. In some embodiments, the downlink OFDMA data frame 202 also carries resource allocation information for one or more STAs that are scheduled for uplink transmissions. For example, the downlink OFDMA data frame 202 may carry the uplink resource allocation information in a signal (SIG) field, such as a high efficiency wireless LAN signal (HEW-SIG) field. The uplink ACK frame 204 may carry acknowledgment indications indicating whether data carried in the downlink OFDMA data frame 202 has been successfully received by one or more of the recipient STAs.

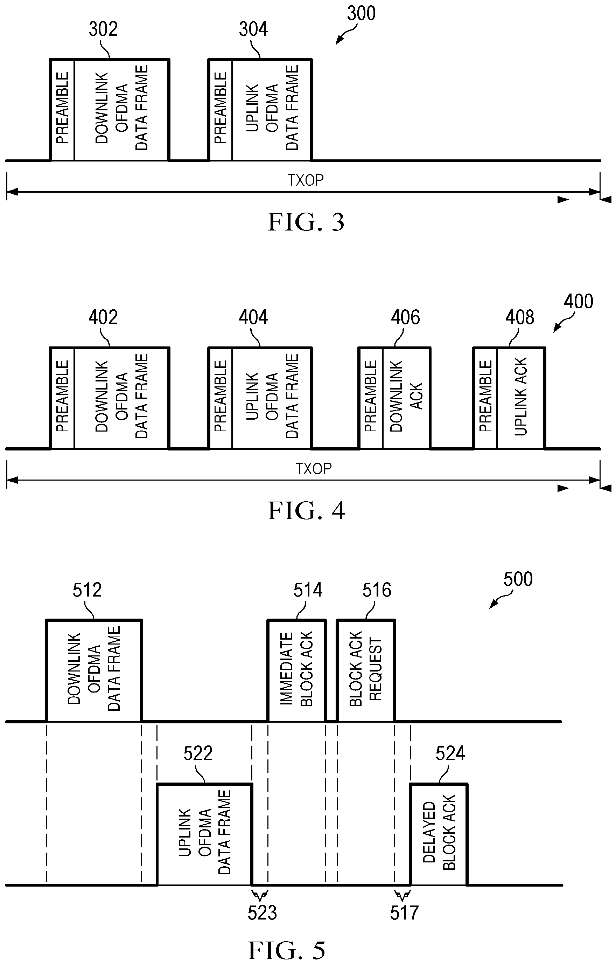

FIG. 3 illustrates a diagram of another embodiment TXOP frame sequence 300. As shown, the embodiment TXOP frame sequence 300 includes a downlink frame 302 followed by an uplink OFDMA data frame 304 communicated in a TXOP. The uplink OFDMA data frame 304 is triggered by the downlink frame 302. The downlink frame 302 may include frequency resource allocation information for the uplink OFDMA data frame 304. In one embodiment, the frequency resource allocation is carried in a SIG field, such as a HEW-SIG field, of the downlink frame 302. The uplink OFDMA data frame 304 may include a preamble field, e.g., a legacy preamble, etc. In one example, the uplink OFDMA data frame 304 is an MU OFDMA data frame that carries data transmitted by different STAs over different frequency sub-bands. In such an example, an AP may assign the frequency sub-bands of the uplink OFDMA data frame 304 to the STAs by including resource allocation information in the downlink frame 302. In one embodiment, multiple frequency sub-bands of the uplink OFDMA data frame 304 may be assigned to the same STA.

In one embodiment, the downlink frame 302 is a downlink MU OFDMA data frame. In another embodiment, the downlink frame 302 is a trigger frame that carries frequency resource allocation information for the uplink OFDMA data frame 304, such as an ACK frame that does not confirm reception of a previous uplink data frame. In such an embodiment, the downlink frame 302 may only carry frequency resource allocation information for the uplink OFDMA data frame 304. In yet another embodiment, the downlink frame 302 is an ACK frame acknowledging receipt of a previous uplink OFDMA data frame. The ACK frame may confirm whether or not a single data frame was successfully received. Alternatively, the ACK frame may be a block ACK frame acknowledging successful reception of multiple frames. The term "ACK frame" is used generally throughout this disclosure to refer to any message indicating whether or not one or more frames were successfully received, such as a positive acknowledgment message that confirms successful reception of one or more frames as well as a negative acknowledgement message that indicates one or more frames were not successfully received.

FIG. 4 illustrates a diagram of another embodiment TXOP frame sequence 400. As shown, the embodiment TXOP frame sequence 400 includes a downlink OFDMA data frame 402, an uplink OFDMA data frame 404, a downlink ACK frame 406, and an uplink ACK frame 408. The downlink OFDMA data frame 402 may be similar to the downlink OFDMA data frame 202 in FIG. 2, and the uplink OFDMA data frame 404 may be similar to the uplink OFDMA data frame 304 in FIG. 3. One or both of the downlink OFDMA data frame 402 and the uplink OFDMA data frame 404 may carry data associated with different STAs over different frequency sub-bands. STAs receiving data in the downlink OFDMA data frame 402 may not be the same STAs that transmit data in the uplink OFDMA data frame 404. In some embodiments, the downlink OFDMA data frame 402 triggers the uplink OFDMA data frame 404. In one embodiment, a TXOP frame sequence may include a number of cascaded downlink OFDMA data frames and uplink OFDMA data frames.

In some embodiments, ACK frames may be communicated in a TXOP to acknowledge receipt of earlier data frames in the TXOP. For example, the downlink ACK frame 406 includes acknowledgement indications indicating whether data segments in the uplink OFDMA data frame 404 were successfully received by the AP. Similarly, the uplink ACK frame 408 includes acknowledgement indications indicating whether data segments in the downlink OFDMA data frame 402 were successfully received by recipient STAs of the downlink OFDMA data frame 402. The downlink ACK frame 406 and the uplink ACK frame 408 may each be a block ACK frame. Further, the downlink ACK frame 406 and the uplink ACK frame 408 may have an MU format, e.g., an MU OFDMA format, which includes acknowledgement indications associated with multiple different STAs.

In some embodiments, a wireless LAN TXOP frame sequence may include different combinations of downlink OFDMA data frames, uplink OFDMA data frames, and/or ACK frames. Various techniques may be used to allocate resources for uplink OFDMA data frames in a TXOP. In one example, uplink frequency resource assignments in an uplink data frame are carried in a downlink frame communicated in the TXOP. In another example, the uplink frequency resource assignments are a priori information of STAs. In such an example, the assignments may be hard coded in the STAs. Various techniques may also be used to acknowledge downlink or uplink data transmissions in a TXOP. For example, one or more ACK frames may be communicated in the TXOP to acknowledge receipt of downlink or uplink data frames in the TXOP. An ACK frame in the TXOP may be transmitted using a multi-user format, such as an MU OFDMA or an MU MIMO format, to include acknowledgement data segments associated with multiple STAs. As described above, downlink ACK frames may also carry resource allocation information for uplink data transmissions in the TXOP.

ACK frames transmitted in a TXOP may be any type of ACKs (e.g., including those defined in an IEEE 802.11 standard), including ACKs and block ACKs (BAs). An ACK acknowledges a single frame and may be transmitted a short inter-frame space (SIFS) after a successful reception of the single frame. A block ACK acknowledges multiple frames, e.g., multiple media access control (MAC) protocol data units (MPDUs) or aggregated-MPDUs (A-MPDUs), with a relationship established between an initiator and a responder for data transmissions. Block ACKs may be immediate block ACKs or delayed block ACKs. An immediate block ACK is typically transmitted by a recipient STA as soon as the recipient STA finishes processing the last frame referenced by the block ACK. The time required to process a frame after receiving the frame is commonly referred to as an SIFS of the frame. A delayed block ACK may be transmitted by a recipient STA after a delay period following an SIFS of the last frame referenced by the delayed block ACK. In some embodiments, the recipient STA transmits the delayed block ACK after a predefined period of time following the SIFS of the last frame referred to by the delayed block ACK. In other embodiments, the recipient STA transmits the delayed block ACK after receiving a block ACK request (BAR) from the STA that transmitted the frames referenced by the block ACK. ACKs referring to a single frame may also be transmitted immediately following an SIFS of a frame or after a delay period.

A combination of immediate and delayed ACKs may be used to support MU frame transmissions in a TXOP as indicated in the ACK Policy field of the MAC header. For example, after a group of recipient STAs receives an MU OFDMA frame, one or more of the recipient STAs may transmit an immediate ACK, and other STAs may transmit delayed ACKs, e.g., in response to a BAR. In some embodiments, the STAs transmitting the delayed ACKs are polled by the STA (e.g., an AP) that transmitted the MU OFDMA data frame. This may be achieved by transmitting BARs to different recipient STAs at different times.

In some embodiments, ACKs are used to acknowledge receipt of cascaded downlink and uplink frames in a TXOP. FIG. 5 illustrates a diagram of an embodiment TXOP frame sequence 500. As shown, the embodiment TXOP frame sequence 500 includes a downlink OFDMA data frame 512, an uplink OFDMA data frame 522, an immediate block ACK frame 514, a BAR frame 516, and a delayed block ACK frame 524. The downlink OFDMA data frame 512 and the uplink OFDMA data frame 522 may be similar to the downlink OFDMA data frame 402 and the uplink OFDMA data frame 404. The immediate block ACK frame 514 is communicated after an SIFS 523 of the uplink OFDMA data frame 522, and acknowledges receipt of data segments carried by the uplink OFDMA data frame 522. The BAR frame 516 triggers the delayed block ACK frame 524. The delayed block ACK frame 524 is transmitted after an SIFS 517 of the BAR frame 516, and acknowledges receipt of data segments carried by the downlink OFDMA data frame 512. In one embodiment, the immediate block ACK frame 514, the BAR frame 516 and the delayed block ACK frame 524 may have a multi-user format, such as an MU OFDMA, a MU MIMO, or a multi-BA format.

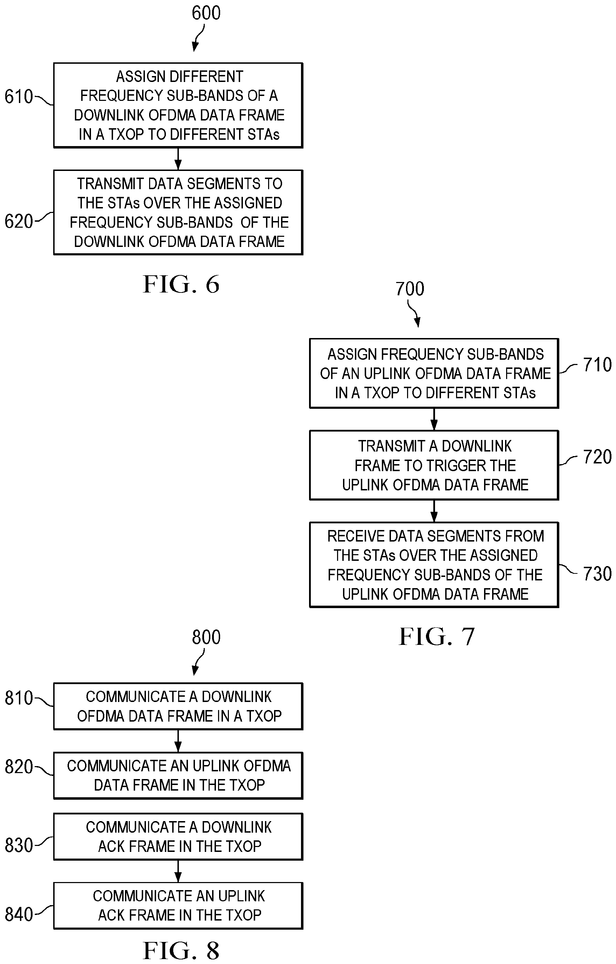

FIG. 6 illustrates a flowchart of an embodiment method 600 for communicating a downlink OFDMA data frame in a TXOP, as may be performed by an AP. In this example, the downlink OFDMA data frame is an MU OFDMA data frame carrying data destined for different STAs over different frequency sub-bands. At step 610, the AP assigns different frequency sub-bands of the downlink OFDMA data frame to the different STAs. In some embodiments, the frequency sub-bands are statically, or semi-statically, assigned to the STAs over multiple downlink OFDMA frames. In other embodiments, the frequency sub-bands are dynamically assigned to the STAs prior to the communication of each downlink OFDMA data frame. At step 620, the AP transmits data segments to the STAs over the assigned frequency sub-bands of the downlink OFDMA data frame. In some embodiments, the AP receives an ACK frame in the TXOP, which includes acknowledgment indications indicating whether the data segments were successfully received by the STAs.

FIG. 7 illustrates a flowchart of an embodiment method 700 for communicating an uplink OFDMA data frame in a TXOP, as may be performed by an AP. In this example, the uplink OFDMA data frame is an MU OFDMA data frame carrying data transmitted by different STAs over different frequency sub-bands. At step 710, the AP assigns frequency sub-bands of the uplink OFDMA data frame to the different STAs. At step 720, the AP transmits a downlink frame to trigger the uplink OFDMA data frame. The downlink frame may be a downlink ACK frame or a downlink data frame, and may be transmitted in the same TXOP as the uplink OFDMA frame or in a TXOP that precedes the TXOP in which the uplink OFDMA frame is communicated. The downlink frame may carry a SIG field to indicate which of the assigned frequency sub-bands are associated with the STAs. In one embodiment, the downlink frame is a block ACK frame that confirms whether data segments of a previous uplink OFDMA data frame were successfully received by the AP. In some embodiments, the uplink OFDMA data frame is not triggered by a downlink frame. In such embodiments, the step 720 is not performed. At step 730, the AP receives data segments from the STAs over the assigned frequency sub-bands of the uplink OFDMA data frame.

FIG. 8 illustrates a flowchart of an embodiment method 800 for communicating a set of frames in a TXOP between an AP and one or more STAs. At step 810, the AP transmits, in the TXOP, a downlink OFDMA data frame to the STAs receiving the downlink OFDMA data frame. At step 820, a group of STAs transmits an uplink OFDMA data frame to the AP in the TXOP. In this example, the downlink OFDMA data frame and the uplink OFDMA data frame are MU OFDMA frames carrying data associated with different STAs over different frequency sub-bands. At step 830, the AP transmits, in the TXOP, a downlink ACK frame indicating whether data segments in the uplink OFDMA data frame were successfully received by the AP. At step 840, the STAs receiving the downlink OFDMA data frame transmit, in the TXOP, an uplink ACK frame to the AP to indicate whether data segments in the downlink OFDMA data frame were successfully received by the recipient STAs. In one embodiment, the downlink ACK frame may be an immediate block ACK frame. In another embodiment, the AP communicates, in the TXOP, a BAR frame to request acknowledgement of receipt of the downlink OFDMA data frame. In such an example, the uplink ACK frame is a delayed block ACK frame.

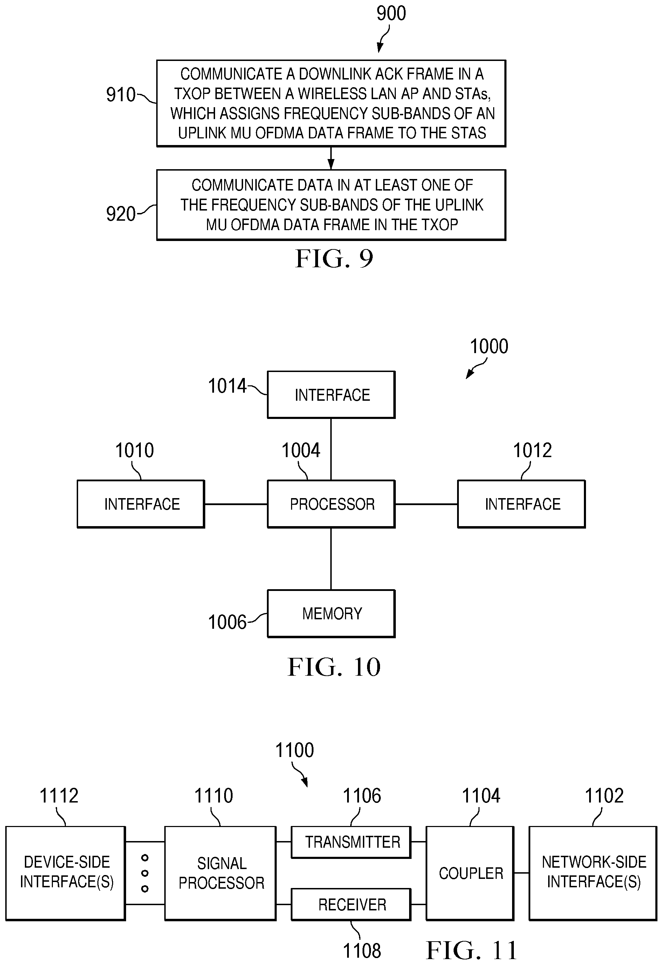

FIG. 9 illustrates a flowchart of an embodiment method 900 for communicating data in a TXOP between an AP and STAs. At step 910, the STAs receive a downlink frame in the TXOP. The downlink frame may be a downlink OFDMA data frame or a downlink ACK frame, and may carry control information that assigns frequency sub-bands of an uplink OFDMA data frame to the STAs. In this example, the uplink OFDMA data frame is an MU OFDMA data frame carrying data transmitted by the STAs over different frequency sub-bands. At step 920, the STAs communicate data over the assigned frequency sub-bands in the TXOP. In one embodiment, the downlink ACK frame may be a block ACK frame which confirms whether data segments of previous uplink OFDMA data frames were successfully received by the AP.

FIG. 10 illustrates a block diagram of an embodiment processing system 1000 for performing methods described herein, which may be installed in a host device. As shown, the processing system 1000 includes a processor 1004, a memory 1006, and interfaces 1010, 1012, 1014, which may (or may not) be arranged as shown in FIG. 10. The processor 1004 may be any component or collection of components adapted to perform computations and/or other processing related tasks, and the memory 1006 may be any component or collection of components adapted to store programming and/or instructions for execution by the processor 1004. In an embodiment, the memory 1006 includes a non-transitory computer readable medium. The interfaces 1010, 1012, 1014 may be any component or collection of components that allow the processing system 1000 to communicate with other devices/components and/or a user. For example, one or more of the interfaces 1010, 1012, 1014 may be adapted to communicate data, control, or management messages from the processor 1004 to applications installed on the host device and/or a remote device. As another example, one or more of the interfaces 1010, 1012, 1014 may be adapted to allow a user or user device (e.g., personal computer (PC), etc.) to interact/communicate with the processing system 1000. The processing system 1000 may include additional components not depicted in FIG. 10, such as long term storage (e.g., non-volatile memory, etc.).

In some embodiments, the processing system 1000 is included in a network device that is accessing, or part otherwise of, a telecommunications network. In one example, the processing system 1000 is in a network-side device in a wireless or wireline telecommunications network, such as an access point, a relay station, a scheduler, a controller, a gateway, a router, an applications server, or any other device in the telecommunications network. In other embodiments, the processing system 1000 is in a user-side device accessing a wireless or wireline telecommunications network, such as a STA, a user equipment (UE), a personal computer (PC), a tablet, a wearable communications device (e.g., a smartwatch, etc.), or any other device adapted to access a telecommunications network.

In some embodiments, one or more of the interfaces 1010, 1012, 1014 connects the processing system 1000 to a transceiver adapted to transmit and receive signaling over the telecommunications network. FIG. 11 illustrates a block diagram of a transceiver 1100 adapted to transmit and receive signaling over a telecommunications network. The transceiver 1100 may be installed in a host device. As shown, the transceiver 1100 comprises a network-side interface 1102, a coupler 1104, a transmitter 1106, a receiver 1108, a signal processor 1110, and device-side interface(s) 1112. The network-side interface 1102 may include any component or collection of components adapted to transmit or receive signaling over a wireless or wireline telecommunications network. The coupler 1104 may include any component or collection of components adapted to facilitate bi-directional communication over the network-side interface 1102. The transmitter 1106 may include any component or collection of components (e.g., up-converter, power amplifier, etc.) adapted to convert a baseband signal into a modulated carrier signal suitable for transmission over the network-side interface 1102. The receiver 1108 may include any component or collection of components (e.g., down-converter, low noise amplifier, etc.) adapted to convert a carrier signal received over the network-side interface 1102 into a baseband signal. The signal processor 1110 may include any component or collection of components adapted to convert a baseband signal into a data signal suitable for communication over the device-side interface(s) 1112, or vice-versa. The device-side interface(s) 1112 may include any component or collection of components adapted to communicate data-signals between the signal processor 1110 and components within the host device (e.g., the processing system 1000, local area network (LAN) ports, etc.).

## Claims

1. A method for wireless communications between a wireless local area network, LAN, access point, AP, and multiple stations, comprising:
communicating (810) data over at least one frequency sub-band of a orthogonal frequency-division multiple access, OFDMA, data frame in a transmission opportunity, TXOP, of the wireless LAN AP;
wherein the OFDMA data frame is a multi-user, MU, OFDMA data frame carrying data associated with a first plurality of stations in respective frequency sub-bands;
wherein the MU OFDMA data frame is a downlink MU OFDMA data frame;
**characterized in that** the method further comprises: communicating an uplink MU OFDMA data frame in the same TXOP following the downlink MU OFDMA data frame, wherein the uplink MU OFDMA data frame carries data associated with a second plurality of stations in respective frequency sub-bands.

2. The method of claim 1, wherein the TXOP is an interval of time where the wireless LAN AP schedules transmission of downlink multi-user, MU, OFDMA data frames and uplink multi-user, MU, OFDMA data frames.

3. The method of claim 1, wherein communicating data over at least one frequency sub-band of the OFDMA data frame in the TXOP of the wireless LAN AP comprises:
receiving, by a station, a data segment over a first frequency sub-band from the AP.

4. The method of claim 1, wherein communicating data over at least one frequency sub-band of the OFDMA data frame in the TXOP of the wireless LAN AP comprises:
assigning different frequency sub-bands of the OFDMA data frame in the TXOP to respective ones of the plurality of stations; and
transmitting, by the AP, data segments to the plurality of stations over the assigned frequency sub-bands.

5. The method of claim 4, further comprising:
receiving an acknowledgement, ACK, frame in the TXOP, the ACK frame comprising an acknowledgment indication indicating whether the data segments were successfully received by the plurality of stations.

6. The method of claim 1, further comprising:
communicating, in the TXOP, a downlink ACK frame indicating whether data segments in the uplink MU OFDMA data frame were successfully received; and
communicating, in the TXOP, an uplink ACK frame indicating whether data segments in the downlink MU OFDMA data frame were successfully received.

7. The method of claim 6, further comprising:
communicating, in the TXOP, a block acknowledgement request, BAR, frame between the downlink ACK frame and the uplink ACK frame, the BAR frame requesting confirmation of whether data segments of the downlink MU OFDMA data frame were successfully received, wherein the uplink ACK frame is a delayed block ACK frame.

8. The method of claim 1, wherein communicating an uplink MU OFDMA data frame in the TXOP following the downlink MU OFDMA data frame comprises:
identifying a first frequency sub-band of the uplink MU OFDMA data frame in the TXOP assigned to a station; and
transmitting, by the station, a data segment over the first frequency sub-band to the AP.

9. The method of claim 8, further comprising:
receiving an ACK frame in the TXOP, the ACK frame comprising an acknowledgment indication that indicates whether the data segment was successfully received by the AP.

10. The method of claim 8, wherein communicating an uplink MU OFDMA data frame in the TXOP following the downlink MU OFDMA data frame comprises:
assigning frequency sub-bands of the uplink MU OFDMA data frame in the TXOP to the plurality of stations; and
receiving, by the AP, data segments from the plurality of stations over the assigned frequency sub-bands.

11. The method of claim 1,
wherein the downlink MU OFDMA frame triggers the uplink MU OFDMA data frame in the TXOP, and carries a signal, SIG, field indicating which of the frequency sub-bands are associated with the second plurality of stations.

12. The method of claim 1, further comprising:
communicating a downlink ACK frame in the TXOP, the downlink ACK frame triggering the uplink MU OFDMA data frame in the TXOP, and carrying a signal, SIG, field indicating which of the frequency sub-bands are associated with the second plurality of stations.

13. The method of claim 12, wherein the downlink ACK frame is a block ACK frame confirming whether data segments of a previous uplink MU OFDMA data frame were successfully received.

14. A device (1000) for wireless communication between a wireless local area network, LAN, access point, AP, and multiple stations, comprising:
a processor (1004); and
a non-transitory computer readable storage medium (1006) storing programming for execution by the processor, the programming including instructions for:
communicating (810) data over at least one frequency sub-band of a orthogonal frequency-division multiple access, OFDMA, data frame in a transmission opportunity, TXOP, of the wireless LAN AP;
wherein the OFDMA data frame is a multi-user, MU, OFDMA data frame carrying data associated with a first plurality of stations in respective frequency sub-bands;
wherein the MU OFDMA data frame is a downlink MU OFDMA data frame; and
communicating an uplink MU OFDMA data frame in the same TXOP following the downlink MU OFDMA data frame, wherein the uplink MU OFDMA data frame carries data associated with a second plurality of stations in respective frequency sub-bands;
wherein the device is the AP or one of the first or second plurality of stations.

15. The device of claim 14, wherein the TXOP is an interval of time where the wireless LAN AP schedules transmission of downlink multi-user, MU, OFDMA data frames and uplink multi-user, MU, OFDMA data frames.

16. The device of claim 14,
wherein the programming comprises further instructions for:
communicating, in the TXOP, a downlink acknowledgment, ACK, frame indicating whether data segments in the uplink MU OFDMA data frame were successfully received; and
communicate, in the TXOP, an uplink ACK frame indicating whether data segments in the downlink MU OFDMA data frame were successfully received.

17. The device of claim 16, wherein the programming comprises further instructions for:
communicating, in the TXOP, a block acknowledgement request, BAR, frame between the downlink ACK frame and the uplink ACK frame, the BAR frame requesting confirmation of whether data segments of the downlink MU OFDMA data frame were successfully received, wherein the uplink ACK frame is a delayed block ACK frame.

18. The device of claim 14, wherein the downlink MU OFDMA frame triggers the uplink MU OFDMA data frame in the TXOP, and carries a signal, SIG, field indicating which of the frequency sub-bands are associated with the second plurality of stations.

## Patentansprüche

1. Verfahren für drahtlose Kommunikation zwischen einem Zugriffspunkt, AP, einem drahtlosen lokalen Netzwerk, LAN, und mehreren Stationen, Folgendes umfassend:
Kommunizieren (810) von Daten über mindestens ein Frequenzteilband eines orthogonalen Frequenzvielfachzugriff-, OFDMA-Datenrahmens in einer Übertragungsmöglichkeit, TXOP, des drahtlosen LAN-AP;
wobei der OFDMA-Datenrahmen ein Mehrbenutzer-, MU-, OFDMA-Datenrahmen ist, der Daten trägt, die mit mehreren ersten Stationen in entsprechenden Frequenzteilbändern verbunden sind;
wobei der MU-OFDMA-Datenrahmen ein Downlink-MU-OFDMA-Datenrahmen ist;
**dadurch gekennzeichnet, dass** das Verfahren ferner Folgendes umfasst: Kommunizieren eines Uplink-MU-OFDMA-Datenrahmens in der gleichen TXOP, die dem Downlink-MU-OFDMA-Datenrahmen folgt, wobei der Uplink-MU-OFDMA-Datenrahmen Daten trägt, die mit mehreren zweiten Stationen in entsprechenden Frequenzteilbändern verbunden sind.

2. Verfahren nach Anspruch 1, wobei die TXOP ein Zeitintervall ist, in dem der drahtlose LAN-AP die Übertragung von Downlink-Mehrbenutzer-, MU-, OFDMA-Datenrahmen und Uplink-Mehrbenutzer-, MU-, OFDMA-Datenrahmen festlegt.

3. Verfahren nach Anspruch 1, wobei das Kommunizieren von Daten über mindestens ein Frequenzteilband des OFDMA-Datenrahmens in der TXOP des drahtlosen LAN-AP Folgendes umfasst:
Empfangen, durch eine Station, eines Datensegments über ein erstes Frequenzteilband von dem AP.

4. Verfahren nach Anspruch 1, wobei das Kommunizieren von Daten über mindestens ein Frequenzteilband des OFDMA-Datenrahmens in der TXOP des drahtlosen LAN-AP Folgendes umfasst:
Zuweisen verschiedener Frequenzteilbänder des OFDMA-Datenrahmens in der TXOP an die entsprechenden der mehreren Stationen; und
Übertragen, durch den AP, von Datensegmenten an die mehreren Stationen über die zugewiesenen Frequenzteilbänder.

5. Verfahren nach Anspruch 4, ferner Folgendes umfassend:
Empfangen eines Bestätigungs-, ACK-, Rahmens in der TXOP, wobei der ACK-Rahmen eine Bestätigungsanzeige umfasst, die anzeigt, ob die Datensegmente erfolgreich von den mehreren Stationen empfangen wurden.

6. Verfahren nach Anspruch 1, ferner Folgendes umfassend:
Kommunizieren eines Downlink-ACK-Rahmens in der TXOP, der anzeigt, ob Datensegmente in dem Uplink-MU-OFDMA-Datenrahmen erfolgreich empfangen wurden; und
Kommunizieren eines Uplink-ACK-Rahmens in der TXOP, der anzeigt, ob Datensegmente im Downlink-MU-OFDMA-Datenrahmen erfolgreich empfangen wurden.

7. Verfahren nach Anspruch 6, ferner Folgendes umfassend:
Kommunizieren, in der TXOP, eines Blockbestätigungsanforderungs-, BAR-Rahmens zwischen dem Downlink-ACK-Rahmen und dem Uplink-ACK-Rahmen,
wobei der BAR-Rahmen eine Bestätigung darüber anfordert, ob Datensegmente des Downlink-MU-OFDMA-Datenrahmens erfolgreich empfangen wurden, wobei der Uplink-ACK-Rahmen ein verzögerter Block-ACK-Rahmen ist.

8. Verfahren nach Anspruch 1, wobei das Kommunizieren eines Uplink-MU-OFDMA-Datenrahmens in der TXOP, die dem Downlink-MU-OFDMA-Datenrahmen folgt, Folgendes umfasst:
Identifizieren eines ersten Frequenzteilbandes des Uplink-MU-OFDMA-Datenrahmens in der TXOP, das mit einer Station verbunden ist; und
Übertragen eines Datensegments durch die Station über das erste Frequenzteilband an den AP.

9. Verfahren nach Anspruch 8, ferner Folgendes umfassend:
Empfangen eines ACK-Rahmens in der TXOP, wobei der ACK-Rahmen eine Bestätigungsanzeige umfasst, die anzeigt, ob das Datensegment erfolgreich von dem AP empfangen wurde.

10. Verfahren nach Anspruch 8, wobei das Kommunizieren eines Uplink-MU-OFDMA-Datenrahmens in der TXOP, die dem Downlink-MU-OFDMA-Datenrahmen folgt, Folgendes umfasst:
Zuweisen von Frequenzteilbändern des Uplink-MU-OFDMA-Datenrahmens in der TXOP an die mehreren Stationen; und
Empfangen, durch den AP, von Datensegmenten von den mehreren Stationen über die zugewiesenen Frequenzteilbänder.

11. Verfahren nach Anspruch 1, wobei der Downlink-MU-OFDMA-Rahmen den Uplink-MU-OFDMA-Datenrahmen in der TXOP auslöst und ein Signalfeld, SIG, trägt, das anzeigt, welche der Frequenzteilbänder den zweiten mehreren Stationen zugeordnet sind.

12. Verfahren nach Anspruch 1, ferner Folgendes umfassend:
Kommunizieren eines Downlink-ACK-Rahmens in der TXOP, wobei der Downlink-ACK-Rahmen den Uplink-MU-OFDMA-Datenrahmen in der TXOP auslöst und ein Signalfeld, SIG, trägt, das anzeigt, welche der Frequenzteilbänder mit den zweiten mehreren Stationen verbunden sind.

13. Verfahren nach Anspruch 12, wobei der Downlink-ACK-Rahmen ein Block-ACK-Rahmen ist, der bestätigt, ob Datensegmente eines vorangehenden Uplink-MU-OFDMA-Datenrahmens erfolgreich empfangen wurden.

14. Vorrichtung (1000) zur drahtlosen Kommunikation zwischen einem Zugriffspunkt, AP, einem drahtlosen lokalen Netzwerk, LAN, und mehreren Stationen, Folgendes umfassend:
einen Prozessor (1004); und
ein nicht vorübergehendes computerlesbares Speichermedium (1006), das das Programmieren für die Ausführung durch den Prozessor speichert, wobei das Programmieren Anweisungen für Folgendes beinhaltet:
Kommunizieren (810) von Daten über mindestens ein Frequenzteilband eines orthogonalen Frequenzvielfachzugriff-, OFDMA-Datenrahmens in einer Übertragungsmöglichkeit, TXOP, des drahtlosen LAN-AP;
wobei der OFDMA-Datenrahmen ein Mehrbenutzer-, MU-, OFDMA-Datenrahmen ist, der Daten trägt, die mit mehreren ersten Stationen in entsprechenden Frequenzteilbändern verbunden sind;
wobei der MU-OFDMA-Datenrahmen ein Downlink-MU-OFDMA-Datenrahmen ist; und
Kommunizieren eines Uplink-MU-OFDMA-Datenrahmens in der gleichen TXOP, die dem Downlink-MU-OFDMA-Datenrahmen folgt, wobei der Uplink-MU-OFDMA-Datenrahmen Daten trägt, die mit mehreren zweiten Stationen in entsprechenden Frequenzteilbändern verbunden sind;
wobei die Vorrichtung der AP oder eine der ersten oder zweiten mehreren Stationen ist.

15. Vorrichtung nach Anspruch 14, wobei die TXOP ein Zeitintervall ist, in dem der drahtlose LAN-AP die Übertragung von Downlink-Mehrbenutzer-, MU-, OFDMA-Datenrahmen und Uplink-Mehrbenutzer-, MU-, OFDMA-Datenrahmen festlegt.

16. Vorrichtung nach Anspruch 14, wobei das Programmieren weitere Anweisungen für Folgendes umfasst:
Kommunizieren, in der TXOP, eines Downlink-Bestätigungs-, ACK-, Rahmens, der anzeigt, ob Datensegmente in dem Uplink-MU-OFDMA-Datenrahmen erfolgreich empfangen wurden; und
in der TXOP einen Uplink-ACK-Rahmen zu kommunizieren, der anzeigt, ob Datensegmente im Downlink-MU-OFDMA-Datenrahmen erfolgreich empfangen wurden.

17. Vorrichtung nach Anspruch 16, wobei das Programmieren weitere Anweisungen für Folgendes umfasst:
Kommunizieren, in der TXOP, eines Blockbestätigungsanforderungs-, BAR-Rahmens zwischen dem Downlink-ACK-Rahmen und dem Uplink-ACK-Rahmen, wobei der BAR-Rahmen eine Bestätigung darüber anfordert, ob Datensegmente des Downlink-MU-OFDMA-Datenrahmens erfolgreich empfangen wurden, wobei der Uplink-ACK-Rahmen ein verzögerter Block-ACK-Rahmen ist.

18. Vorrichtung nach Anspruch 14, wobei der Downlink-MU-OFDMA-Rahmen den Uplink-MU-OFDMA-Datenrahmen in der TXOP auslöst und ein Signalfeld, SIG, trägt, das anzeigt, welche der Frequenzteilbänder mit den zweiten mehreren Stationen verbunden sind.

## Revendications

1. Procédé destiné aux communications sans fil entre un réseau local sans fil, LAN, un point d'accès, AP et multiples stations, comprenant :
la communication (810) des données sur au moins une sous-bande de fréquence d'une trame de données à accès multiple par répartition en fréquence orthogonale, OFDMA, dans une opportunité de transmission, TXOP, de l'AP LAN sans fil ;
dans lequel la trame de données OFDMA est une trame de données multi-utilisateurs, MU, la trame de données OFDMA transportant des données associées à une première pluralité de stations dans des sous-bandes de fréquences respectives ;
dans lequel la trame de données OFDMA MU est une trame de données OFDMA MU en liaison descendante ;
**caractérisé en ce que** le procédé comprend en outre :
la communication d'une trame de données OFDMA MU de liaison montante dans le même TXOP suivant la trame de données OFDMA MU de liaison descendante, la trame de données OFDMA MU de liaison montante transportant des données associées à une seconde pluralité de stations dans des sous-bandes de fréquences respectives.

2. Procédé selon la revendication 1, dans lequel le TXOP est un intervalle de temps où l'AP LAN sans fil planifie la transmission de trames de données OFDMA multi-utilisateurs, MU, en liaison descendante et de trames de données OFDMA multi-utilisateurs, MU, en liaison montante.

3. Procédé selon la revendication 1, dans lequel la communication de données sur au moins une sous-bande de fréquence de la trame de données OFDMA dans le TXOP de l'AP LAN sans fil comprend :
la réception, par une station, d'un segment de données sur une première sous-bande de fréquence de l'AP.

4. Procédé selon la revendication 1, dans lequel la communication de données sur au moins une sous-bande de fréquence de la trame de données OFDMA dans le TXOP de l'AP LAN sans fil comprend :
l'attribution de différentes sous-bandes de fréquences de la trame de données OFDMA dans le TXOP à des stations respectives de la pluralité de stations ; et
la transmission, par l'AP, des segments de données à la pluralité de stations sur les sous-bandes de fréquences attribuées.

5. Procédé selon la revendication 4, comprenant en outre :
la réception d'une trame d'accusé de réception, ACK, dans le TXOP, la trame ACK comprenant une indication d'accusé de réception indiquant si les segments de données ont été reçus avec succès par la pluralité de stations.

6. Procédé selon la revendication 1, comprenant en outre :
la communication, dans le TXOP, d'une trame ACK de liaison descendante indiquant si les segments de données dans la trame de données OFDMA MU de liaison montante ont été reçus avec succès ; et
la communication, dans le TXOP, d'une trame ACK de liaison montante indiquant si les segments de données dans la trame de données OFDMA MU de liaison descendante ont été reçus avec succès.

7. Procédé selon la revendication 6, comprenant en outre :
la communication, dans le TXOP, d'une trame de demande d'accusé de réception de bloc, BAR, entre la trame ACK de liaison descendante et la trame ACK de liaison montante, la trame BAR demandant la confirmation de la bonne réception des segments de données de la trame de données OFDMA MU en liaison descendante, la trame ACK de liaison montante étant une trame ACK de bloc retardée.

8. Procédé selon la revendication 1, dans lequel la communication d'une trame de données OFDMA MU de liaison montante dans le TXOP suivant la trame de données OFDMA MU de liaison descendante comprend :
l'identification d'une première sous-bande de fréquence de la trame de données OFDMA MU de liaison montante dans le TXOP attribué à une station ; et
la transmission, par la station, d'un segment de données sur la première sous-bande de fréquence à l'AP.

9. Procédé selon la revendication 8, comprenant en outre :
la réception d'une trame ACK dans le TXOP, la trame ACK comprenant une indication d'accusé de réception qui indique si le segment de données a bien été reçu par l'AP.

10. Procédé selon la revendication 8, dans lequel la communication d'une trame de données OFDMA MU de liaison montante dans le TXOP suivant la trame de données OFDMA MU de liaison descendante comprend :
l'attribution des sous-bandes de fréquences de la trame de données OFDMA MU de liaison montante dans le TXOP à la pluralité de stations ; et
la réception, par l'AP, des segments de données de la pluralité de stations sur les sous-bandes de fréquences attribuées.

11. Procédé selon la revendication 1, dans lequel la trame OFDMA MU de liaison descendante déclenche la trame de données OFDMA MU de liaison montante dans le TXOP, et transporte un champ de signal, SIG, indiquant lesquelles des sous-bandes de fréquences sont associées à la seconde pluralité de stations.

12. Procédé selon la revendication 1, comprenant en outre :
la communication d'une trame ACK de liaison descendante dans le TXOP, la trame ACK de liaison descendante déclenchant la trame de données OFDMA MU de liaison montante dans le TXOP, et transportant un champ de signal, SIG, indiquant lesquelles des sous-bandes de fréquences sont associées à la seconde pluralité de stations.

13. Procédé selon la revendication 12, dans lequel la trame ACK de liaison descendante est une trame ACK de bloc confirmant si les segments de données d'une trame de données OFDMA MU de liaison montante précédente ont été reçus avec succès.

14. Dispositif (1000) destiné à la communication sans fil entre un réseau local sans fil, LAN, un point d'accès, AP, et multiples stations, comprenant :
un processeur (1004) ; et
un support de stockage lisible par ordinateur non transitoire (1006) stockant une programmation destinée à être exécutée par le processeur, la programmation comportant des instructions pour :
la communication (810) des données sur au moins une sous-bande de fréquence d'une trame de données à accès multiple par répartition en fréquence orthogonale, OFDMA, dans une opportunité de transmission, TXOP, de l'AP LAN sans fil ;
dans lequel la trame de données OFDMA est une trame de données multi-utilisateurs, MU, la trame de données OFDMA transportant des données associées à une première pluralité de stations dans des sous-bandes de fréquences respectives ;
dans lequel la trame de données OFDMA MU est une trame de données OFDMA MU en liaison descendante ; et
la communication d'une trame de données OFDMA MU de liaison montante dans le même TXOP suivant la trame de données OFDMA MU de liaison descendante, dans lequel la trame de données OFDMA MU de liaison montante transporte des données associées à une seconde pluralité de stations dans des sous-bandes de fréquences respectives ;
dans lequel le dispositif est l'AP ou l'une de la première ou de la seconde pluralité de stations.

15. Dispositif selon la revendication 14, dans lequel le TXOP est un intervalle de temps où l'AP LAN sans fil planifie la transmission de trames de données OFDMA, multi-utilisateurs, MU, en liaison descendante et de trames de données OFDMA multi-utilisateurs, MU, en liaison montante.

16. Dispositif selon la revendication 14, dans lequel la programmation comprend des instructions supplémentaires pour :
la communication, dans le TXOP, d'une trame d'accusé de réception, ACK, de liaison descendante indiquant si des segments de données dans la trame de données OFDMA MU de liaison montante ont été reçus avec succès ; et
la communication, dans le TXOP, d'une trame ACK de liaison montante indiquant si les segments de données dans la trame de données OFDMA MU de liaison descendante ont été reçus avec succès.

17. Dispositif selon la revendication 16, dans lequel la programmation comprend des instructions supplémentaires pour :
la communication, dans le TXOP, d'une trame de demande d'accusé de réception de bloc, BAR, entre la trame ACK de liaison descendante et la trame ACK de liaison montante, la trame BAR demandant la confirmation de la bonne réception des segments de données de la trame de données OFDMA MU en liaison descendante, la trame ACK de liaison montante étant une trame ACK de bloc retardée.

18. Dispositif selon la revendication 14, dans lequel la trame MU OFDMA de liaison descendante déclenche la trame de données OFDMA MU de liaison montante dans le TXOP, et transporte un champ de signal, SIG, indiquant lesquelles des sous-bandes de fréquences sont associées à la seconde pluralité de stations.
